# EUROPÄISCHE PATENTSCHRIFT

(11) **EP 2 313 229 B1**
(45) Veröffentlichungstag und Bekanntmachung des Hinweises auf die Patenterteilung: **09.09.2020**
(21) Anmeldenummer: 09775546.6
(22) Anmeldetag: 22.06.2009
(51) Int. Cl.: B23K 20/00

(54) **VERFAHREN UND VORRICHTUNG ZUR FORMUNG DES SCHWEIßDRAHTENDES**
METHOD AND DEVICE FOR FORMING THE WELDING WIRE END
PROCÉDÉ ET DISPOSITIF POUR FAÇONNER L'EXTRÉMITÉ D'UN FIL DE SOUDAGE

(30) Priorität: 30.07.2008 AT 11802008
(43) Veröffentlichungstag der Anmeldung: 27.04.2011
(73) Patentinhaber: Fronius International GmbH, 4643 Pettenbach (AT)
(72) Erfinder: KROISS, Uwe, A-4073 Wilhering (AT); STIEGLBAUER, Walter, A-4901 Manning (AT); ARTELSMAIR, Josef, A-4552 Wartberg (AT)
(74) Vertreter: Sonn & Partner Patentanwälte
(86) Internationale Anmeldenummer: PCT/AT2009/000250
(87) Internationale Veröffentlichungsnummer: WO 2010/012011

(56) Entgegenhaltungen:
- EP-A2- 0 145 253
- WO-A1-2006/005096
- DE-A1- 3 642 221
- JP-A- S6 061 174
- JP-A- S56 131 069

## Beschreibung

Die Erfindung betrifft ein Verfahren zur Formung eines Endes eines Schweißdrahtes nach dem Oberbegriff des Anspruchs 1.

Ebenso betrifft die Erfindung eine Vorrichtung zur Formung eines Endes eines Schweißdrahtes nach dem Oberbegriff der Ansprüche 11 und 14.

Aus dem Stand der Technik ist allgemein bekannt, dass für einen Schweißprozess mit abschmelzender Elektrode ein endloser Schweißdraht, welcher auf einer Drahtrolle aufgewickelt ist oder aus einem Drahtfass entnommen wird, erforderlich ist. Dabei sind die Enden des Schweißdrahtes jeweils abgeschnitten, sodass diese entsprechend scharfkantig und mit einem Grat versehen sind. Vor dem durchzuführenden Schweißprozess ist es erforderlich, den geeigneten Schweißdraht in eine Drahtseele bzw. Zuführvorrichtung, welche in einem Schlauchpaket integriert ist oder extern einem Schweißbrenner zugeführt ist, einzufädeln. Dabei soll die Drahtseele durch den Grat nicht beschädigt werden, sodass der Schweißdraht beim Einfädeln nicht in der Drahtseele stecken bleibt bzw. die Drahtseele nicht beschädigt wird. Um diese Anforderung zu erfüllen, muss jenes Ende des Schweißdrahtes, welches zum Einfädeln in die Drahtseele einzuführen ist, abgerundet werden. Dies wird derzeit manuell durchgeführt, indem das Ende mit einer Feile oder einem entsprechenden Schleifwerkzeug abgerundet und der Grat entfernt wird.

Nachteilig ist hierbei, dass dies insbesondere bei härteren Materialien (wie Chrom-Nickel oder Stahl) des Schweißdrahtes zeitaufwendig ist. Andererseits besteht bei weichen Materialien (wie Aluminium-Legierungen) die Gefahr, dass sich der Schweißdraht durch die mechanische Bearbeitung verbiegen kann. In diesem Fall müsste der Schweißdraht erneut abgeschnitten werden und der Grat erneut entfernt werden.

Die WO 2006/005096 A1 offenbart ein Verfahren und eine Vorrichtung zum Einfädeln eines Schweißdrahtes, wobei in der Vorrichtung zum Fördern des Schweißdrahtes ein Distanzelement verstellbar angeordnet ist, sodass zum Einfädeln des Schweißdrahtes der Abstand zwischen den Rollen der Drahtfördervorrichtung verändert werden kann.

Die JP S56 131069 A beschreibt ein Verfahren der gegenständlichen Art, wobei das Ende des Schweißdrahtes halbkugelförmig geformt wird, um das nachfolgende Zünden eines Lichtbogens zu verbessern.

Die EP 0 145 253 A2 beschreibt ein Verfahren zur Bildung von Bonddrähten aus Aluminium, deren Ende kugelförmig ausgestaltet wird.

Die Aufgabe der Erfindung besteht daher in der Schaffung eines oben genannten Verfahrens und einer oben genannten Vorrichtung durch welche das Ende eines Schweißdrahtes durch einen automatisierten Vorgang verformt bzw. abgerundet werden kann.

Die Aufgabe der Erfindung wird in verfahrensmäßiger Hinsicht dadurch gelöst, dass in Abhängigkeit des Materials und des Durchmessers des Schweißdrahtes ein Lichtbogen zwischen einer mit einer Stromquelle eines Schweißgerätes verbundenen Kontaktplatte und dem Schweißdraht zur Formung des Endes des Schweißdrahtes erzeugt wird, wobei das Ende des Schweißdrahtes halbkugelförmig ausgebildet wird und der Durchmesser des Schweißdrahtes durch den Durchmesser des halbkugelförmigen Endes des Schweißdrahtes im Wesentlichen nicht überschritten wird, wobei die Stromquelle von einem Schweißausgang auf einen Einfädelausgang zur Formung des Endes des Schweißdrahtes umgeschaltet wird, und nach der Bildung des halbkugelförmigen Endes des Schweißdrahtes die Stromquelle automatisch vom Einfädelausgang auf den Schweißausgang umgeschaltet wird.

Vorteilhaft ist hierbei, dass das Ende des Schweißdrahtes durch ein schnelles und sehr einfach zu handhabendes Verfahren zum Einfädeln ohne Beschädigungen geformt wird. Dadurch ist auch gewährleistet, dass der Einfädelvorgang unabhängig von der Länge der Zuführvorrichtung ist, wie z.B. im Schiffsbau mit bis zu 70 m Länge. Dabei ist es von Vorteil, wenn der Lichtbogen von der Stromquelle eines Schweißgerätes erzeugt wird, da dadurch der Aufwand minimal gehalten werden kann.

Vorteilhafterweise werden Kennlinien in Abhängigkeit des Materials und des Durchmessers des Schweißdrahtes erstellt und abgespeichert und der Lichtbogen zur Formung des Endes des Schweißdrahtes basierend auf der jeweiligen Kennlinie erzeugt.

Durch die Maßnahme, dass die Stromquelle zur Erzeugung des Lichtbogens von einem Aktivierungssignal aktiviert wird, kann der Aufwand minimal gehalten werden, da in vorteilhafter Weise eine bereits vorhandene Stromquelle, nämlich jene des Schweißgeräts herangezogen werden kann.

Durch Bildung des Lichtbogens zur Verformung des Endes des Schweißdrahtes wird von der Stromquelle zwischen der Kontaktplatte und dem Schweißdraht eine Spannung angelegt.

Vorteilhafterweise wird der Lichtbogen durch eine Kontaktzündung gebildet, indem der Schweißdraht von einem Klemmmechanismus fixiert und von einer Kontaktiervorrichtung kontaktiert wird, die Kontaktplatte bis zum Schweißdraht bewegt wird und anschließend vom Schweißdraht wegbewegt wird.

Ebenso kann der Lichtbogen durch eine Kontaktzündung gebildet werden, indem der Schweißdraht durch zumindest eine Fördervorrichtung bis zur Kontaktplatte gefördert wird und der Schweißdraht anschließend zurückgefördert wird, wobei der Schweißdraht von einer Kontaktiervorrichtung kontaktiert wird.

Wenn die Kontaktplatte aus der Flucht des Schweißdrahtes bewegt werden kann, ist es möglich, dass der Schweißdraht an der Kontaktplatte vorbei gefördert wird.

Gemäß einem weiteren Merkmal der Erfindung ist vorgesehen, dass der Lichtbogen durch eine Kontaktzündung gebildet wird, indem der Schweißdraht durch die Bewegung des Schweißbrenners bis zur fest montierten Kontaktplatte bewegt wird und der Schweißdraht mit dem Schweißbrenner anschließend zurückbewegt wird, wobei der Schweißdraht im Schweißbrenner kontaktiert wird.

Für einen erneuten Einfädelvorgang zu einem späteren Zeitpunkt wird das halbkugelförmige Ende des Schweißdrahtes vorteilhafterweise am Ende eines Schweißprozesses gebildet.

Von Vorteil ist es, wenn der Lichtbogen zur Formung des Endes des Schweißdrahtes von einem auf das Material des Schweißdrahtes abgestimmten Schutzgas geschützt wird.

Gelöst wird die erfindungsgemäße Aufgabe auch durch eine oben genannte Vorrichtung, wobei die Vorrichtung eine Grundplatte, ein Klemmmechanismus, eine Kontaktiervorrichtung, eine Kontaktplatte und eine Stromquelle umfasst bei der auf der Grundplatte der Klemmmechanismus, die Kontaktiervorrichtung und die Kontaktplatte fluchtend angeordnet sind, wobei die Kontaktplatte bewegbar montiert ist und der Klemmmechanismus und die Kontaktiervorrichtung an einer festen Position der Grundplatte montiert sind, und die Kontaktplatte und die Kontaktiervorrichtung mit der Stromquelle verbunden sind, sodass zwischen dem vom Klemmmechanismus gehaltenen und von der Kontaktiervorrichtung kontaktierten Schweißdraht und der Kontaktplatte der Lichtbogen zur Formung des halbkugelförmigen Endes des Schweißdrahtes zündbar ist, wobei die Stromquelle durch die Stromquelle eines Schweißgerätes gebildet ist und einen umschaltbaren Schweißausgang und Einfädelausgang aufweist, wobei nach der Bildung des halbkugelförmigen Endes des Schweißdrahtes (13) die Stromquelle (2) automatisch vom Einfädelausgang auf den Schweißausgang umgeschaltet wird.

Die Kontaktplatte kann durch einen Motor oder einen Magneten zum Schweißdraht und vom Schweißdraht weg bewegbar sein, wobei eine Aktivierung des Motors oder des Magneten von der Betätigung des Bedienelements abhängig ist.

Der Klemmmechanismus für den Schweißdraht kann mechanisch, magnetisch oder elektrisch durch einen Motor ausgebildet sein.

Gelöst wird die erfindungsgemäße Aufgabe auch durch eine oben genannte Vorrichtung, wobei die Vorrichtung eine Grundplatte, eine Kontaktiervorrichtung, eine Kontaktplatte, eine Fördervorichtung und eine Stromquelle umfasst wobei auf der

Grundplatte die eine Kontaktiervorrichtung und die Kontaktplatte zur Kontaktierung des Schweißdrahtes fluchtend angeordnet sind, und die Fördervorrichtung zur Förderung des Schweißdrahtes der Grundplatte zugeordnet ist, und die Kontaktplatte und die Kontaktiervorrichtung mit der Stromquelle verbunden sind, sodass zwischen dem von der Fördervorrichtung geförderten und der Kontaktiervorrichtung kontaktieren Schweißdraht und der Kontaktplatte ein Lichtbogen zur Formung des halbkugelförmigen Endes des Schweißdrahtes zündbar ist, wobei die Stromquelle durch die Stromquelle eines Schweißgerätes gebildet ist und einen umschaltbaren Schweißausgang und Einfädelausgang aufweist, wobei nach der Bildung des halbkugelförmigen Endes des Schweißdrahtes (13) die Stromquelle (2) automatisch vom Einfädelausgang auf den Schweißausgang umgeschaltet wird.

Vorteilhafterweise ist die Kontaktplatte bewegbar an der Grundplatte montiert, sodass diese aus der Flucht des Schweißdrahtes bewegbar ist. Dadurch kann der Schweißdraht an der Kontaktplatte vorbei gefördert werden.

Die vorliegende Erfindung wird anhand der beigefügten, schematischen Zeichnungen näher erläutert. Darin zeigen:
- Fig. 1: eine schematische: Darstellung einer Schweißmaschine bzw. eines Schweißgerätes;
- Fig. 2: ein Ende eines Schweißdrahtes vor und nach der Durchführung des erfindungsgemäßen Verfahrens;
- Fig. 3: einen Strom-/Spannungsverlauf während der Formung des Schweißdrahtendes;
- Fig. 4: eine erste Variante einer erfindungsgemäßen Vorrichtung zur Formung des Endes eines Schweißdrahtes;
- Fig. 5: eine zweite Variante einer erfindungsgemäßen Vorrichtung;
- Fig. 6: eine dritte Variante einer erfindungsgemäßen Vorrichtung;
- Fig. 7: bis 10 den Ablauf des erfindungsgemäßen Verfahrens mit der ersten Variante der erfindungsgemäßen Vorrichtung; und
- Fig. 11: bis 14 den Ablauf des erfindungsgemäßen Verfahrens mit der zweiten Variante der erfindungsgemäßen Vorrichtung.

Einführend wird festgehalten, dass gleiche. Teile des Ausführungsbeispiels mit gleichen Bezugszeichen versehen werden.

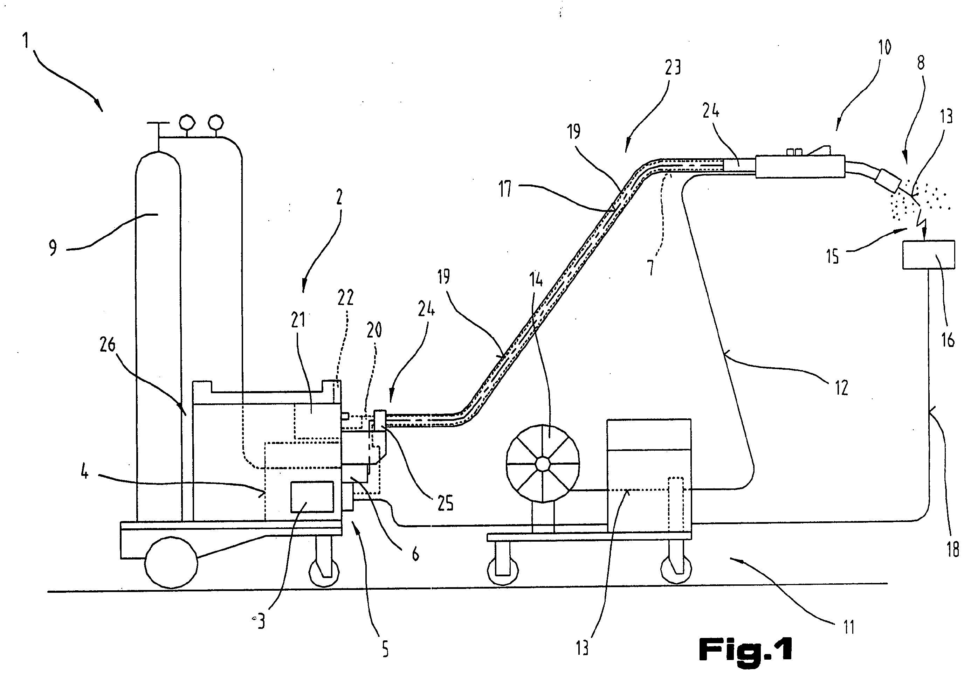

In Fig. 1 ist ein Schweißgerät 1 bzw. eine Schweißanlage für verschiedenste Prozesse bzw. Verfahren, wie z.B. MIG/MAG-Schweißverfahren, WIG/TIG-Schweißverfahren, Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung bzw. eine sogenannte Drahtseele 12 ein Zusatzwerkstoff bzw. ein Schweißdraht 13 von einem Drahtspeicher bzw. einer Vorratstrommel 14, wie beispielsweise einer Drahtrolle oder einen Drahtfass, in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode (nicht dargestellt) und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet, und von dieser werden anschließend die einzelnen Komponenten des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

Zur Durchführung eines Schweißprozesses mit abschmelzendem Schweißdraht 13, wie dem MIG/MAG-Verfahren, ist unter anderem zu berücksichtigen, dass das entsprechende Material und der Durchmesser für den Schweißdraht 13 ausgewählt wird. Entspricht also der in der Drahtseele 12 befindliche Schweißdraht 13 nicht den gewünschten Anforderungen, muss dieser gewechselt werden. Das heißt, dass dieser Schweißdraht 13 zurück auf die Drahtrolle 14 bzw. zurück in das Drahtfass zu fördern ist. Anschließend kann der für den folgenden Schweißprozess erforderliche Schweißdraht 13 eingefädelt werden.
Bei einem derartigen Einfädelvorgang wird der Schweißdraht 13 beginnend im Drahtvorschubgerät 11, über die zumindest eine Drahtseele 12 (im Schlauchpaket 23 oder extern geführt) und durch ein Kontaktrohr im Schweißbrenner 10 gefördert, sodass der Schweißdraht 13 in weiterer Folge an der Schweißstelle am Werkstück 16 zur Verfügung steht.

Je nach Schweißprozess kann die Drahtseele 12 in einem Bereich unterbrochen sein, wie dies beispielsweise beim CMT-Schweißprozess durch den sogenannten Drahtpuffer der Fall ist. Bei einem derartigen Drahtpuffer ist beim Einfädelvorgang besondere Vorsicht geboten. Dazu muss das Ende bzw. der Anfang des Schweißdrahtes 13 abgerundet werden, um die Drahtseele(n) 12 nicht zu beschädigen.

Erfindungsgemäß erfolgt dies derart, dass der Schweißdraht 13 durch Zünden eines Lichtbogens 15 angeschmolzen wird, sodass das Ende halbkugelförmig ausgebildet wird. Somit kann der Schweißdraht 13 zumindest in die Drahtseele 12 eingefädelt werden, ohne diese zu beschädigen.

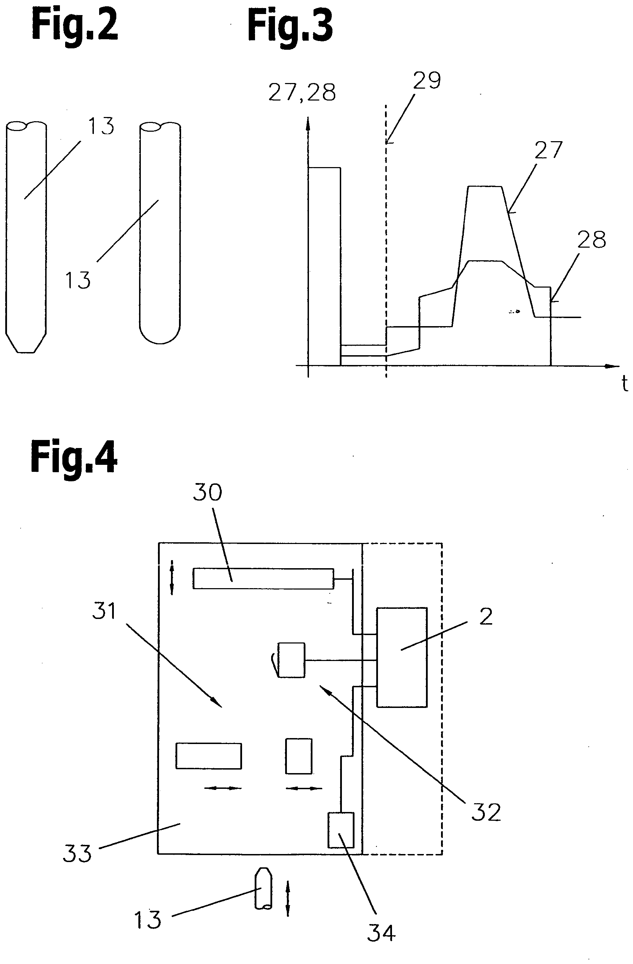

Im Folgenden wird anhand der Fig. 2 bis 14 im Detail beschrieben, wie das Ende des Schweißdrahtes 13 mit dem Lichtbogen 15 abgerundet werden kann, um einen sicheren Einfädelvorgang gewährleisten zu können. Auf den Einfädelvorgang an sich wird dabei nicht näher eingegangen, da dieser bereits allgemein aus dem Stand der Technik bekannt ist.

In Fig. 2 ist nun in einer Detailansicht der Schweißdraht 13 vor dem Formen bzw. Abrunden (links) und nach dem Formen bzw. Abrunden (rechts) mit dem erfindungsgemäßen Verfahren dargestellt. Nach der Formung ist der Schweißdraht 13 am Ende im Wesentlichen halbkugelförmig ausgebildet, wobei der Durchmesser der Halbkugel den Durchmesser des Schweißdrahtes 13 nicht überschreitet. Dies ist eine wesentliche Bedingung für das erfindungsgemäße Verfahren, da bei einem größeren Durchmesser der Halbkugel als jenem des Schweißdrahtes 13 dieser in der Drahtseele 12 stecken bleiben kann.

Diese Bedingung wird im Wesentlichen dadurch erfüllt, dass für jede Material/Durchmesser-Kombination des Schweißdrahtes 13 eine Kennlinie erstellt und abgespeichert wird, gemäß der der Formvorgang durchgeführt wird. Die Stromquelle 2 regelt die Energieeinbringung des Lichtbogens 15 in den Schweißdraht 13 entsprechend der abgespeicherten Kennlinie. Die Kennlinien sind dabei bevorzugt in der Steuervorrichtung 4 der Stromquelle 2 gespeichert und werden in Abhängigkeit des eingestellten Materials und Durchmessers des Schweißdrahtes 13 aufgerufen.

Eine Kennlinie wird aus einer Vielzahl von Parametern gebildet, wobei beispielhaft der Kurvenverlauf der zwei Hauptparameter, des Stroms 27 und der Spannung 28, in Fig. 3 in Abhängigkeit der Zeit t dargestellt ist. Hieraus ist insbesondere ersichtlich, dass bis zu einem Zeitpunkt 29 eine Kontaktzündung durchgeführt wird, wobei eine Spannung 28 zwischen einer Kontaktplatte 30 und dem Schweißdraht 13 angelegt wird. Berührt der Schweißdraht 13 die Kontaktplatte 30, entsteht ein Kurzschluss, welcher von der Stromquelle 2 erkannt wird. Daraufhin wird der Strom 27 erhöht, sodass beim Aufbrechen des Kurzschlusses zum Zeitpunkt 29 der Lichtbogen 15 zwischen Schweißdraht 13 und Kontaktplatte 30 gebildet werden kann. Ab dem Zeitpunkt 29 ist der Verlauf von Strom 27 und Spannung 28 derart gewählt, dass das Ende des Schweißdrahtes 13 angeschmolzen und halbkugelförmig ausgebildet wird. Insbesondere wird dies durch einen Hauptpuls des Stroms 27 erreicht. Dabei überschreitet erfindungsgemäß der Durchmesser der Halbkugel den Durchmesser des Schweißdrahtes 13 nicht. Auch ist ersichtlich, dass der Strom 27 nach dem Hauptpuls bewusst auf Null gesenkt wird, sodass der Lichtbogen 15 definiert erlischt. Dadurch wird im Wesentlichen die exakt geformte Halbkugel erhalten und nicht mehr verändert.

In den folgenden Fig. 4 bis 6 sind nun unterschiedliche Varianten der erfindungsgemäßen Vorrichtung zur Durchführung des erfindungsgemäßen Verfahrens dargestellt.

In Fig. 4 besteht die Vorrichtung aus einem Klemmmechanismus 31, einer Kontaktiervorrichtung 32 und der Kontaktplatte 30, welche auf einer Grundplatte 33 montiert sind. Die Anordnung erfolgt dabei fluchtend, sodass der Schweißdraht 13 zuerst durch den Klemmmechanismus 31 bewegt wird, anschließend von der Kontaktiervorrichtung 32 zumindest auf einer Seite kontaktiert werden kann und schließlich bei der Kontaktplatte 30 ansteht. Die Kontaktplatte 30 ist dabei der Gegenpol zum Schweißdraht 13. Dazu sind die Kontaktplatte 30 und die Kontaktiervorrichtung 32 mit der Stromquelle 2 verbunden, sodass der Lichtbogen 15 zwischen dem Schweißdraht 13 - welcher beispielsweise durch eine Feder der Kontaktiervorrichtung 32 kontaktiert wird - und der Kontaktplatte 30 erzeugt werden kann. Hierzu ist der Schweißdraht 13 fest vom Klemmmechanismus 31, welcher gemäß den Pfeilen horizontal beweglich ist, gehalten, und die Kontaktplatte 30 in vertikaler Richtung (Pfeil) beweglich angeordnet. Somit kann der Stromkreis geschlossen und ein Lichtbogen 15 mit der Kontaktzündung gebildet werden. Daher muss die Verbindung zur Stromquelle 2 auch flexibel sein. Die Stromquelle 2 entspricht der Stromquelle im Schweißgerät 1.

Entspricht die Stromquelle 2 jener im Schweißgerät 1, so ist die Kontaktplatte 30 und/oder Kontaktiervorrichtung 32 dem Ausgang für den Schweißbrenner 10 parallel geschaltet. Erfindungsgemäß weist die Stromquelle 2 zwei getrennte Ausgänge auf. Die Stromquelle 2 weist zusätzlich zum normalen Ausgang einen sogenannten Einfädelausgang auf, wobei automatisch zwischen diesen beiden Ausgängen umgeschaltet wird.

Die Ansteuerung bzw. Regelung zur Formung des Endes des Schweißdrahtes 13 wird im Wesentlichen von der Stromquelle 2 durchgeführt. Bevorzugt leitet die Stromquelle 2 aufgrund eines Aktivierungssignals die erforderlichen Schritte ein, um das Ende des Schweißdrahtes 13 entsprechend auszubilden. Die hier dargestellte Vorrichtung dient im Wesentlichen für ein Handschweißgerät. Das Aktivierungssignal wird durch Betätigung eines Bedienelements 34 erzeugt, welches mit der Stromquelle 2 verbunden ist. Das Bedienelement 34 ist auf der Grundplatte 33 angeordnet, in einem auf der Grundplatte 33 aufgesetzten Gehäuse integriert und/oder auf der Ein-/Ausgabevorrichtung 22 des Schweißgerätes 1 angeordnet. Entsprechend sind auch der Klemmmechanismus 31 und die Bewegungen der Kontaktplatte 30 von der Stromquelle 2 geregelt. Selbstverständlich ist es aber auch möglich, dass der Klemmmechanismus 31 mechanisch ausgeführt ist, und der Benutzer den Schweißdraht 13 händisch fixiert.

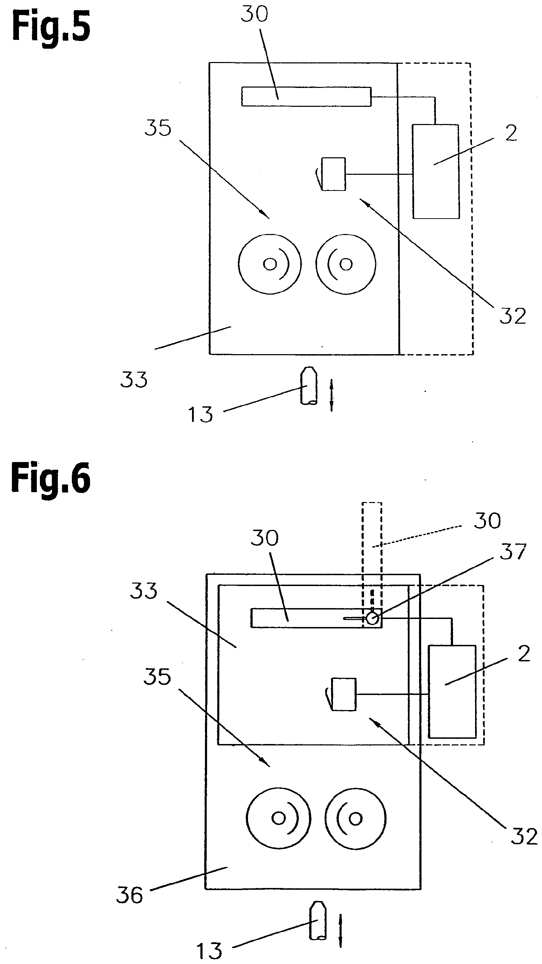

Gemäß Fig. 5 besteht die Vorrichtung aus einer Fördervorrichtung 35, der Kontaktiervorrichtung 32 und der Kontaktplatte 30, welche auf der Grundplatte 33 fluchtend montiert sind. Die Kontaktplatte 30 und die Kontaktiervorrichtung 32 sind wiederum mit der Stromquelle 2 verbunden, sodass der Lichtbogen 15 zwischen Schweißdraht 13 und Kontaktplatte 30 zur Formung des Endes des Schweißdrahtes 13 mit einer Kontaktzündung erzeugt werden kann.

Die Fördervorrichtung 35 ersetzt den Klemmmechanismus 31 der Vorrichtung in Fig. 4. Daher können, sofern im Folgenden nicht anders beschrieben, die Erläuterungen zu Fig. 4 auch auf Fig. 5 übertragen werden. Durch die Fördervorrichtung 35, welche bevorzugt durch zwei Förderrollen gebildet wird, kann der Schweißdraht 13 in Richtung der fest montierten Kontaktplatte 30 und wieder zurück bewegt werden. Der Schweißdraht 13 wird an der Kontaktiervorrichtung 32 vorbeigeführt, sodass dieser kontaktiert wird.

Eine derartige Vorrichtung kann sowohl bei Handschweißgeräten als auch bei automatisierten Schweißanlagen eingesetzt werden. Beim Einsatz in Handschweißgeräten wird das Aktivierungssignal wiederum von einem Bedienelement 35 (nicht dargestellt) erzeugt. Hingegen wird das Aktivierungssignal beim Einsatz in automatisierten Schweißanlagen beispielsweise von einer übergeordneten Ablaufsteuerung, beispielsweise einer Robotersteuerung, oder am Ende eines sogenannten Schweißjobs erzeugt.

In Fig. 6 ist eine weitere Vorrichtung dargestellt, welche im Wesentlichen der in Fig. 5 gezeigten entspricht. Deshalb können, sofern im Folgenden nicht anders beschrieben, die Erläuterungen zu den Fig. 4 und 5 auch auf Fig. 6 übertragen werden.

Hierbei ist wesentlich, dass das erfindungsgemäße Verfahren in einem Hilfsantrieb durchgeführt wird, welcher anschließend den Schweißdraht 13 über die Kontaktplatte 30 hinaus weiterbefördert. Demzufolge entspricht die Fördervorrichtung 35 jener des Hilfsantriebs, welcher auf einer Motorplatte 36 montiert ist und in einem entsprechenden Gehäuse integrierbar ist. Auf der Grundplatte 33 sind nur noch die Kontaktplatte 30 und die Kontaktiervorrichtung 32 angeordnet.

Damit der Schweißdraht 13 über die Kontaktplatte 30 hinaus gefördert werden kann, muss diese bewegbar sein. Beispielsweise ist auf einer Seite eine Welle 37 in der Kontaktplatte 30 integriert, über welcher diese mit einem Motor, Magneten, usw. schwenkbar ist. Dies ist mit der strichliert dargestellten senkrechten Kontaktplatte 30 gezeigt. Entsprechend kann auch die Kontaktiervorrichtung 32 vom Schweißdraht 13 wegbewegt werden, sodass diese keinen Widerstand bei der Förderung des Schweißdrahtes 13 darstellt und kein Stromübergang möglich ist.

Ein Einsatzgebiet dieser Variante ist bei Drahtwechselsystemen für Drahtfässer, also für automatisierte Schweißanlagen. Genauso gut kann diese Variante aber auch bei Drahtantrieben im Drahtvorschubgerät 11 eingesetzt werden, also bei Handschweißgeräten.

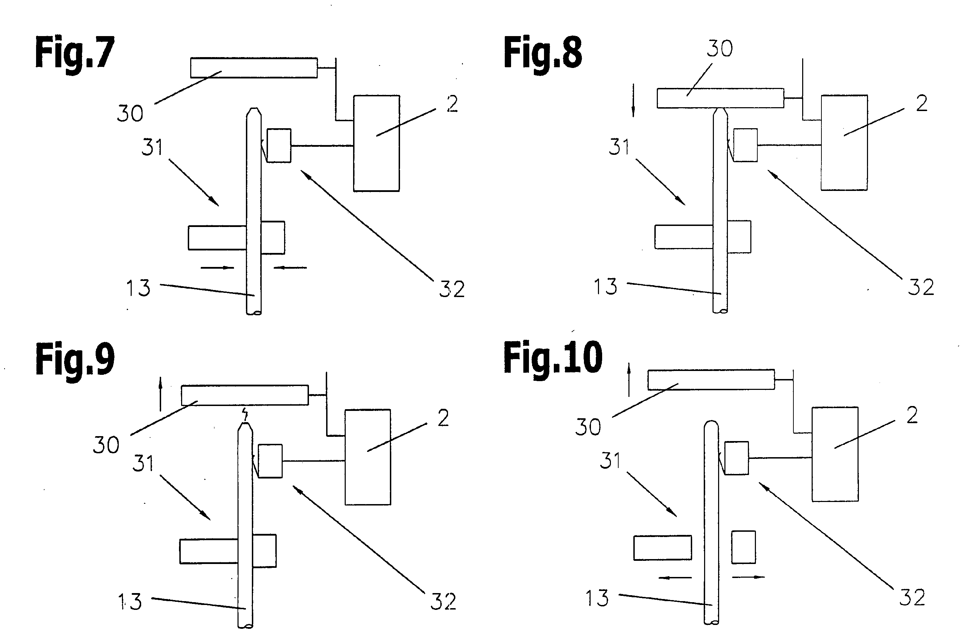

In den Fig. 7 bis 14 ist das erfindungsgemäße Verfahren anhand zweier Varianten der erfindungsgemäßen Vorrichtung beschrieben. Dabei wird im Detail auf das Verfahren zur Formung des Endes des Schweißdrahtes 13 eingegangen, ohne näher auf die zuvor beschriebenen konstruktiven Details einzugehen. Einführend sei hingewiesen, dass die dargestellten Pfeile die entsprechenden Bewegungsrichtungen der dazugehörigen Komponenten wie Kontaktplatte 30, Klemmmechanismus 31, Fördervorrichtung 35 oder Schweißdraht 13 anzeigen (wie auch bereits in den Fig. 4 bis 6).

Anhand der Fig. 7 bis 10 wird im Folgenden das Verfahren unter Verwendung des Klemmmechanismus 31 gemäß Fig. 4 beschrieben. Zuerst, wie aus Fig. 7 ersichtlich, wird der Schweißdraht 13 durch den Klemmmechanismus 31 hindurch, vorbei an der Kontaktiervorrichtung 32 im Wesentlichen bis zur Kontaktplatte 30 bewegt. Anschließend wird der Klemmmechanismus 31 geschlossen. Bevorzugt durch einen Motor, per Hand, einen Magneten, usw., sodass der Schweißdraht 13 fixiert und ausgerichtet ist. Daraus resultiert im Wesentlichen automatisch, dass der Schweißdraht 13 durch die Kontaktiervorrichtung 32 kontaktiert ist. Je nachdem, wie weit der Schweißdraht 13 an die Kontaktplatte 30 heran bewegt wurde, ist bereits ein Kontakt bzw. ein Kurzschluss oder noch ein undefinierter Abstand vorhanden. Dies wird durch die Stromquelle 2 durch Anlegen einer Spannung 28 zwischen Kontaktiervorrichtung 32 und der Kontaktplatte 30 erkannt. Bricht die Spannung 28 zusammen, bzw. wird diese nahezu Null, ist ein Kurzschluss vorhanden, bleibt die angelegte Spannung 28 aufrecht, muss ein Kurzschluss hergestellt werden.

Dies erfolgt, wie aus Fig. 8 ersichtlich, derart, dass die Kontaktplatte 30 mittels eines Motors, Magneten, usw. in Richtung Schweißdraht 13 bewegt wird, bis die Stromquelle 2 einen Kurzschluss erkennt, welcher für eine Kontaktzündung erforderlich ist. Wie bereits aus Fig. 3 bekannt, wird nun der Strom 27 angehoben, sodass bei der folgenden Rückbewegung der Kontaktplatte 30 der Lichtbogen 15 gezündet werden kann, wie in Fig. 9 dargestellt. Die Stromquelle 2 erkennt anhand des Verlaufs der Spannung 28 den brennenden Lichtbogen 15 und generiert den Hauptpuls, sodass der Schweißdraht 13 definiert angeschmolzen und das Ende halbkugelförmig ausgebildet wird. Dies erfolgt gemäß der anhand von Durchmesser und Material des Schweißdrahtes 13 ausgewählten Kennlinie. Nachdem der Lichtbogen 15 definiert beendet wurde, wird die Kontaktplatte 30 in die Ausgangsstellung bewegt, wie in Fig. 10 dargestellt. Anschließend wird der Klemmmechanismus 31 wieder gelöst, sodass der Schweißdraht 13 mit dem halbkugelförmig ausgebildeten Ende für den Einfädelvorgang entfernt werden kann.

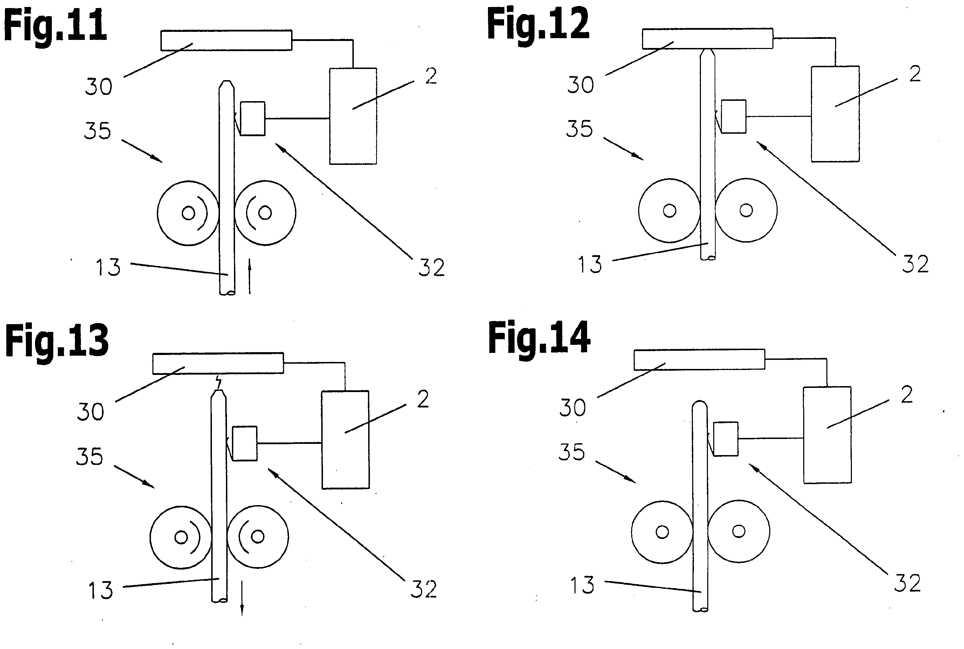

In den Fig. 11 bis 14 wird im Folgenden das Verfahren unter Verwendung der Fördervorrichtung 35 gemäß Fig. 5 oder 6 beschrieben.

Im Wesentlichen kann das Verfahren gemäß den Fig. 7 bis 10 hierauf übertragen werden. Der Unterschied besteht nun darin, dass die Fördervorrichtung 35 den Schweißdraht 13 entsprechend zur Kontaktplatte 30 und weg von der Kontaktplatte 30 fördert. Dabei verändert die Kontaktplatte 30 ihre Position während des Verfahrens zur Formung des Endes des Schweißdrahtes 13 nicht. Lediglich kann die Kontaktplatte 30 gemäß Fig. 6 geschwenkt werden, sodass der Schweißdraht 13 an der Kontaktplatte 30 vorbei gefördert werden kann.

Das Verfahren kann auch von einem Roboter ausgeführt werden, indem dieser den Schweißbrenner 10 an einer Position positioniert, an welcher die Kontaktplatte 30 montiert ist. Hierbei ist demnach keine Kontaktiervorrichtung 32 erforderlich, da diese Funktion ein im Schweißbrenner 10 befindliches Kontaktrohr übernimmt. Des weiteren ist auch keine zusätzliche Fördervorrichtung 35 erforderlich, da der Schweißdraht 13 bereits gefördert ist. Die Formung des Endes des Schweißdrahtes 13 erfolgt hierbei für den nächsten Einfädelvorgang dieses Schweißdrahtes 13. Demgemäß wird das erfindungsgemäße Verfahren vor einem Wechsel des Schweißdrahtes 13 durchgeführt.

Abschließend sei noch erwähnt, dass für die Kontaktplatte 30 und die Kontaktiervorrichtung 32 entsprechend elektrisch leitfähige Materialien, wie beispielsweise Kupfer, verwendet werden, sodass eine exakte Durchführung des erfindungsgemäßen Verfahrens gewährleistet ist.

Ebenso ist auch eine Ansteuerung bzw. Regelung der Fördervorrichtung 35, des Klemmmechanismus 31 und/oder des Motors, Magneten, usw. zur Bewegung der Kontaktplatte 30 durch eine externe Steuerung möglich. Diese ist dann bevorzugt über eine Datenverbindung mit der Stromquelle 2 verbunden, um das erfindungsgemäße Verfahren durchführen zu können.

Selbstverständlich wird beim erfindungsgemäßen Verfahren auch kein Tropfen vom Schweißdraht 13 abgelöst, wie dies bei einem Schweißprozess der Fall ist. Dies ist auch schon deshalb nicht möglich, da die Brenndauer des Lichtbogens 15 für den jeweiligen Schweißdraht 13 extrem kurz ist, beispielsweise im Millisekundenbereich oder: darunter. Diese Zeit reicht aus, um das Ende des Schweißdrahtes 13 aufzuschmelzen und die halbkugelige Form auszubilden.

Auch sei darauf hingewiesen, dass ein Kurzschluss zwischen Schweißdraht 13 und Kontaktplatte 30 durch eine Messung des Motorstroms der Fördervorrichtung 35 oder jenes Motors, welcher die Kontaktplatte 30 bewegt, erkannt werden kann.

Es können auch Sicherheitsmaßnahmen getroffen werden, indem beispielsweise nach der Formung des Endes des Schweißdrahtes 13 eine definierte Zeitdauer gewartet wird, bis der Klemmmechanismus 31 freigegeben wird bzw. die Fördervorrichtung 35 den Schweißdraht 13 in die entsprechende Richtung weiterbewegt.

## Patentansprüche

1. Verfahren zur Formung eines Endes eines Schweißdrahtes (13) mit einem definierten Material und einem definierten Durchmesser vor einem Einfädelvorgang, bei dem der Schweißdraht (13) von einem Drahtspeicher über zumindest eine Drahtseele (12) durch ein in einem Schweißbrenner (10) angeordnetes Kontaktrohr gefördert wird, **dadurch gekennzeichnet, dass** in Abhängigkeit des Materials und des Durchmessers des Schweißdrahtes (13) ein Lichtbogen (15) zwischen einer mit einer Stromquelle (2) eines Schweißgerätes (1) verbundenen Kontaktplatte (30) und dem Schweißdraht (13) zur Formung des Endes des Schweißdrahtes (13) erzeugt wird, wobei das Ende des Schweißdrahtes (13) halbkugelförmig ausgebildet wird und der Durchmesser des Schweißdrahtes (13) durch den Durchmesser des halbkugelförmigen Endes des Schweißdrahtes (13) im Wesentlichen nicht überschritten wird, wobei die Stromquelle (2) von einem Schweißausgang auf einen Einfädelausgang zur Formung des Endes des Schweißdrahtes (13) umgeschaltet wird, und nach der Bildung des halbkugelförmigen Endes des Schweißdrahtes (13) die Stromquelle (2) automatisch vom Einfädelausgang auf den Schweißausgang umgeschaltet wird.

2. Verfahren nach Anspruch 1, **dadurch gekennzeichnet, dass** Kennlinien in Abhängigkeit des Materials und des Durchmessers des Schweißdrahtes (13) erstellt und abgespeichert werden und dass der Lichtbogen (15) zur Formung des Endes des Schweißdrahtes (13) basierend auf der jeweiligen Kennlinie erzeugt wird.

3. Verfahren nach Anspruch 1 oder 2, **dadurch gekennzeichnet,**
**dass** die Stromquelle (2) zur Erzeugung des Lichtbogens (15) von einem Aktivierungssignal aktiviert wird.

4. Verfahren nach Anspruch 3, **dadurch gekennzeichnet, dass** von der Stromquelle (2) zwischen der Kontaktplatte (30) und dem Schweißdraht (13) eine Spannung (28) angelegt wird.

5. Verfahren nach einem der Ansprüche 1 bis 4, **dadurch gekennzeichnet, dass** der Lichtbogen (15) durch eine Kontaktzündung gebildet wird, indem der Schweißdraht (13) von einem Klemmmechanismus (31) fixiert und von einer Kontaktiervorrichtung (32) kontaktiert wird, die Kontaktplatte (30) bis zum Schweißdraht (13) bewegt wird und anschließend vom Schweißdraht (13) wegbewegt wird.

6. Verfahren nach einem der Ansprüche 1 bis 4, **dadurch gekennzeichnet, dass** der Lichtbogen (15) durch eine Kontaktzündung gebildet wird, indem der Schweißdraht (13) durch zumindest eine Fördervorrichtung (35) bis zur Kontaktplatte (30) gefördert wird und der Schweißdraht (13) anschließend zurück gefördert wird, wobei der Schweißdraht (13) von einer Kontaktiervorrichtung (32) kontaktiert wird.

7. Verfahren nach Anspruch 6, **dadurch gekennzeichnet, dass** die Kontaktplatte (30) aus der Flucht des Schweißdrahtes (13) bewegt wird und der Schweißdraht (13) an der Kontaktplatte (30) vorbei gefördert wird.

8. Verfahren nach einem der Ansprüche 1 bis 4, **dadurch gekennzeichnet, dass** der Lichtbogen (15) durch eine Kontaktzündung gebildet wird, indem der Schweißdraht (13) durch die Bewegung des Schweißbrenners (10) bis zur fest montierten Kontaktplatte (30) bewegt wird und der Schweißdraht (13) mit dem Schweißbrenner (10) anschließend zurück bewegt wird, wobei der Schweißdraht (13) im Schweißbrenner (10) kontaktiert wird.

9. Verfahren nach einem der Ansprüche 6 bis 8, **dadurch gekennzeichnet, dass** für einen erneuten Einfädelvorgang zu einem späteren Zeitpunkt das Ende des Schweißdrahtes (13) am Ende eines Schweißprozesses halbkugelförmig ausgebildet wird.

10. Verfahren nach einem der Ansprüche 1 bis 9, **dadurch gekennzeichnet, dass** der Lichtbogen (15) von einem auf das Material des Schweißdrahtes (13) abgestimmten Schutzgas geschützt wird.

11. Vorrichtung zur Formung eines Endes eines Schweißdrahtes (13), **dadurch gekennzeichnet, dass** die Vorrichtung eine Grundplatte (33), ein Klemmmechanismus (31), eine Kontaktiervorrichtung (32), eine Kontaktplatte (30) und eine Stromquelle (2) umfasst wobei auf der Grundplatte (33) der Klemmmechanismus (31), die Kontaktiervorrichtung (32) und die Kontaktplatte (30) fluchtend angeordnet sind, wobei die Kontaktplatte (30) bewegbar montiert ist und der Klemmmechanismus (31) und die Kontaktiervorrichtung (32) an einer festen Position der Grundplatte (33) montiert sind, und die Kontaktplatte (30) und die Kontaktiervorrichtung (32) mit der Stromquelle (2) verbunden sind, sodass zwischen dem vom Klemmmechanismus (31) gehaltenen und von der Kontaktiervorrichtung (32) kontaktierten Schweißdraht (13) und der Kontaktplatte (30) der Lichtbogen (15) zur Formung eines halbkugelförmigen Endes des Schweißdrahtes (13) zündbar ist , wobei die Stromquelle (2) durch die Stromquelle (2) eines Schweißgerätes (1) gebildet ist und einen umschaltbaren Schweißausgang und Einfädelausgang aufweist, wobei nach der Bildung des halbkugelförmigen Endes des Schweißdrahtes (13) die Stromquelle (2) automatisch vom Einfädelausgang auf den Schweißausgang umgeschaltet wird.

12. Vorrichtung nach Anspruch 11, **dadurch gekennzeichnet, dass** die Kontaktplatte (30) durch einen Motor oder einen Magneten zum Schweißdraht (13) und vom Schweißdraht (13) weg bewegbar ist, wobei eine Aktivierung des Motors oder des Magneten von der Betätigung des Bedienelements (34) abhängig ist.

13. Vorrichtung nach Anspruch 11 oder 12, **dadurch gekennzeichnet, dass** der Klemmmechanismus (31) für den Schweißdraht (13) mechanisch, magnetisch oder elektrisch durch einen Motor ausgebildet ist.

14. Vorrichtung zur Formung eines Endes eines Schweißdrahtes (13), **dadurch gekennzeichnet, dass** die Vorrichtung eine Grundplatte (33), eine Kontaktiervorrichtung (32), eine Kontaktplatte (30), eine Fördervorichtung (35) und eine Stromquelle (2) umfasst wobei auf der Grundplatte (33) die Kontaktiervorrichtung (32) und die Kontaktplatte (30) zur Kontaktierung des Schweißdrahtes (13) fluchtend angeordnet sind, und die Fördervorrichtung (35) zur Förderung des Schweißdrahtes (13) der Grundplatte (33) zugeordnet ist, und die Kontaktplatte (30) und die Kontaktiervorrichtung (32) mit der Stromquelle (2) verbunden sind, sodass zwischen dem von der Fördervorrichtung (35) geförderten und der Kontaktiervorrichtung (32) kontaktierten Schweißdraht (13) und der Kontaktplatte (30) der Lichtbogen (15) zur Formung eines halbkugelförmigen Endes des Schweißdrahtes (13) zündbar ist , wobei die Stromquelle (2) durch die Stromquelle (2) eines Schweißgerätes (1) gebildet ist und einen umschaltbaren Schweißausgang und Einfädelausgang aufweist, wobei nach der Bildung des halbkugelförmigen Endes des Schweißdrahtes (13) die Stromquelle (2) automatisch vom Einfädelausgang auf den Schweißausgang umgeschaltet wird.

15. Vorrichtung nach Anspruch 14, **dadurch gekennzeichnet, dass** die Kontaktplatte (30) bewegbar an der Grundplatte (33) montiert ist, sodass diese aus der Flucht des Schweißdrahtes (13) bewegbar ist.

## Claims

1. Method for shaping an end of a welding wire (13) having a defined material and a defined diameter before a threading process in which the welding wire (13) is conveyed from a wire storage means via at least one wire core (12) through a contact tube arranged in a welding torch (10), **characterised in that** an arc (15) is generated between a contact plate (30), which is connected to a power source (2) of a welding appliance (1), and the welding wire (13) on the basis of the material and the diameter of the welding wire (13) in order to shape the end of the welding wire (13), the end of the welding wire (13) being formed so as to be hemispherical and the diameter of the welding wire (13) being substantially not exceeded by the diameter of the hemispherical end of the welding wire (13), the power source (2) being switched from a welding output to a threading output in order to shape the end of the welding wire (13), and the power source (2) being automatically switched from the threading output to the welding output after the hemispherical end of the welding wire (13) has been formed.

2. Method according to claim 1, **characterised in that** characteristic curves are created on the basis of the material and the diameter of the welding wire (13) and stored, and **in that** the arc (15) for shaping the end of the welding wire (13) is generated based on the relevant characteristic curve.

3. Method according to either claim 1 or claim 2, **characterised in that** the power source (2) for generating the arc (15) is activated by an activation signal.

4. Method according to claim 3, **characterised in that** a voltage (28) is applied by the power source (2) between the contact plate (30) and the welding wire (13).

5. Method according to any of claims 1 to 4, **characterised in that** the arc (15) is formed by contact ignition, by virtue of the welding wire (13) being secured by a clamp mechanism (31) and contacted by a contacting device (32), the contact plate (30) being moved up to the welding wire (13) and then being moved away from the welding wire (13).

6. Method according to any of claims 1 to 4, **characterised in that** the arc (15) is formed by contact ignition, by virtue of the welding wire (13) being conveyed up to the contact plate (30) by at least one conveying device (35) and the welding wire (13) then being conveyed back, the welding wire (13) being contacted by a contacting device (32).

7. Method according to claim 6, **characterised in that** the contact plate (30) is moved out of alignment with the welding wire (13) and the welding wire (13) is conveyed past the contact plate (30).

8. Method according to any of claims 1 to 4, **characterised in that** the arc (15) is formed by contact ignition, by virtue of the welding wire (13) being moved by the movement of the welding torch (10) up to the fixedly mounted contact plate (30) and the welding wire (13) then being moved back by the welding torch (10), the welding wire (13) being contacted in the welding torch (10).

9. Method according to any of claims 6 to 8, **characterised in that**, for a new threading process at a later point in time, the end of the welding wire (13) is formed so as to be hemispherical at the end of a welding process.

10. Method according to any of claims 1 to 9, **characterised in that** the arc (15) is protected by a protective gas which is matched to the material of the welding wire (13).

11. Device for shaping an end of a welding wire (13), **characterised in that** the device comprises a base plate (33), a clamp mechanism (31), a contacting device (32), a contact plate (30) and a power source (2), the clamp mechanism (31), the contacting device (32) and the contact plate (30) being arranged in alignment on the base plate (33), the contact plate (30) being movably mounted and the clamp mechanism (31) and the contacting device (32) being mounted at a fixed position on the base plate (33), and the contact plate (30) and the contacting device (32) being connected to the power source (2) such that the arc (15) for shaping a hemispherical end of the welding wire (13) can be ignited between the welding wire (13), which is held by the clamp mechanism (31) and contacted by the contacting device (32), and the contact plate (30), the power source (2) being formed by the power source (2) of a welding appliance (1) and having a switchable welding output and threading output, the power source (2) being automatically switched from the threading output to the welding output after the hemispherical end of the welding wire (13) has been formed.

12. Device according to claim 11, **characterised in that** the contact plate (30) can be moved towards the welding wire (13) and away from the welding wire (13) by a motor or a magnet, activation of the motor or the magnet being dependent on the actuation of the operating element (34).

13. Device according to either claim 11 or claim 12, **characterised in that** the clamp mechanism (31) for the welding wire (13) is formed mechanically, magnetically or electrically by a motor.

14. Device for shaping an end of a welding wire (13), **characterised in that** the device comprises a base plate (33), a contacting device (32), a contact plate (30), a conveying device (35) and a power source (2), the contacting device (32) and the contact plate (30) for contacting the welding wire (13) being arranged in alignment on the base plate (33), the conveying device (35) for conveying the welding wire (13) being associated with the base plate (33), and the contact plate (30) and the contacting device (32) being connected to the power source (2) such that the arc (15) for shaping a hemispherical end of the welding wire (13) can be ignited between the welding wire (13), which is conveyed by the conveying device (35) and contacted by the contacting device (32), and the contact plate (30), the power source (2) being formed by the power source (2) of a welding appliance (1) and comprising a switchable welding output and threading output, the power source (2) being automatically switched from the threading output to the welding output after the hemispherical end of the welding wire (13) has been formed.

15. Device according to claim 14, **characterised in that** the contact plate (30) is movably mounted on the base plate (33) such that it can be moved out of alignment with the welding wire (13).

## Revendications

1. Procédé pour la formation d'une extrémité d'un fil de soudure (13) avec un matériau défini et un diamètre défini avant un processus d'enfilage, dans lequel le fil de soudure (13) est convoyé d'un réservoir de fil par l'intermédiaire d'au moins une âme de fil (12) à travers un tube de contact disposé dans un chalumeau de soudure (10), **caractérisé en ce que**, en fonction du matériau et du diamètre du fil de soudure (13), un arc électrique (15) est généré entre une plaque de contact (30) reliée avec une source de courant (2) d'un appareil de soudure (1) et le fil de soudure (13) pour la formation de l'extrémité du fil de soudure (13), dans lequel l'extrémité du fil de soudure (13) présente une forme semi-sphérique et le diamètre du fil de soudure (13) n'est globalement pas dépassé par le diamètre de l'extrémité semi-sphérique du fil de soudure (13), dans lequel la source de courant (2) est commutée d'une sortie de soudure vers une sortie d'enfilage pour la formation de l'extrémité du fil de soudure (13) et, après la formation de l'extrémité semi-sphérique du fil de soudure (13), la source de courant (2) est automatiquement commutée de la sortie d'enfilage vers la sortie de soudure.

2. Procédé selon la revendication 1, **caractérisé en ce que** des courbes caractéristiques sont créées et enregistrées en fonction du matériau et du diamètre du fil de soudure (13) et **en ce que** l'arc électrique (15) pour la formation du fil de soudure (13) est généré sur la base de la courbe caractéristique correspondante.

3. Procédé selon la revendication 1 ou 2, **caractérisé en ce que** la source de courant (2) pour la production de l'arc électrique (15) est activée par un signal d'activation.

4. Procédé selon la revendication 3, **caractérisé en ce qu'**une tension (28) est appliquée par la source de courant (2) entre la plaque de contact (30) et le fil de soudure (13).

5. Procédé selon l'une des revendications 1 à 4, **caractérisé en ce que** l'arc électrique (15) est généré par un allumage par contact, grâce au fait que le fil de soudure (13) est fixé par un mécanisme de serrage (31) et est mis en contact par un dispositif de mise en contact (32), la plaque de contact (30) est déplacée jusqu'au fil de soudure (13) puis éloignée du fil de soudure (13).

6. Procédé selon l'une des revendications 1 à 4, **caractérisé en ce que** l'arc électrique (15) est généré par un allumage par contact, grâce au fait que le fil de soudure (13) est convoyé par au moins un dispositif de convoyage (35) jusqu'à la plaque de contact (30) et le fil de soudure (13) est ensuite ramené, dans lequel le fil de soudure (13) est mis en contact par un dispositif de mise en contact (32).

7. Procédé selon la revendication 6, **caractérisé en ce que** la plaque de contact (30) est déplacée hors de l'alignement du fil de soudure (13) et le fil de soudure (13) est convoyé devant la plaque de contact (30).

8. Procédé selon l'une des revendications 1 à 4, **caractérisé en ce que** l'arc électrique (15) est généré par un allumage par contact, grâce au fait que le fil de soudure (13) est déplacé par le mouvement du chalumeau de soudure (10) jusqu'à la plaque de contact (30) montée de manière fixe et le fil de soudure (13) avec le chalumeau de soudure (10) est ensuite ramené, dans lequel le fil de soudure (13) est mis en contact dans le chalumeau de soudure (10).

9. Procédé selon l'une des revendications 6 à 8, **caractérisé en ce que**, pour un nouveau processus d'enfilage à un moment ultérieur, l'extrémité du fil de soudure (13) est formée en forme de demi-sphère à la fin d'un processus de soudure.

10. Procédé selon l'une des revendications 1 à 9, **caractérisé en ce que** l'arc électrique (15) est protégé par un gaz protecteur adapté au matériau du fil de soudure (13).

11. Dispositif de formation d'une extrémité d'un fil de soudure (13), **caractérisé en ce que** le dispositif comprend une plaque de base (33), un mécanisme de serrage (31), un dispositif de mise en contact (32), une plaque de contact (30) et une source de courant (2), dans lequel, sur la plaque de base (33), le mécanisme de serrage (31), le dispositif de mise en contact (32) et la plaque de contact (30) sont disposés de manière alignée, dans lequel la plaque de contact (30) est montée de manière mobile et le mécanisme de serrage (31) et le dispositif de mise en contact (32) sont montés à une position fixe de la plaque de base (33) et la plaque de contact (30) et le dispositif de mise en contact (32) sont reliés avec la source de courant (2), de façon à ce que, entre le fil de soudure (13) maintenu par le mécanisme de serrage (31) et mis en contact par le dispositif de mise en contact (32) et la plaque contact (30), l'arc électrique (15) pour la formation d'une extrémité semi-sphérique du fil de soudure (13) peut être allumé, dans lequel la source de courant (2) est constituée de la source de courant (2) d'un appareil de soudure (1) et comprend une sortie de soudure et une sortie d'enfilage commutables, dans lequel, après la formation de l'extrémité semi-sphérique du fil de soudure (13), la source de courant (2) est automatiquement commutée de la sortie d'enfilage vers la sortie de soudure.

12. Dispositif selon la revendication 11, **caractérisé en ce que** la plaque de contact (30) peut être déplacée par un moteur ou un aimant vers le fil de soudure (13) ou éloigné du fil de soudure (13), dans lequel une activation du moteur ou de l'aimant dépend de l'actionnement de l'élément de commande (34).

13. Dispositif selon la revendication 11 ou 12, **caractérisé en ce que** le mécanisme de serrage (31) pour le fil de soudure (13) est réalisé de manière mécanique, magnétique ou électrique par un moteur.

14. Dispositif de formation d'une extrémité d'un fil de soudure (13), **caractérisé en ce que** le dispositif comprend une plaque de base (33), un dispositif de mise en contact (32), une plaque de contact (30), et un dispositif de convoyage (35) et une source de courant (2), dans lequel, sur la plaque de base (33), le dispositif de mise en contact (32) et la plaque de contact (30) sont disposés de manière alignée pour la mise en contact du fil de soudure (13) et le dispositif de convoyage (35) pour le convoyage du fil de soudure (13) est attribué à la plaque de base (33) et la plaque de contact (32) et le dispositif de mise en contact (32) sont reliés avec la source de courant (2), de façon à ce que, entre le fil de soudure (13) convoyé par le dispositif de convoyage (35) et mis en contact par le dispositif de mise en contact (32) et la plaque de contact, l'arc électrique (15) pour la formation d'une extrémité semi-sphérique du fil de soudure (13) peut être allumé, dans lequel la source de courant (2) est constituée de la source de courant (2) d'un appareil de soudure (1) et comprend une sortie de soudure et une sortie d'enfilage commutables, dans lequel, avant la formation de l'extrémité semi-sphérique du fil de soudure (13), la source de courant (2) est automatiquement commutée de la sortie d'enfilage vers la sortie de soudure.

15. Dispositif selon la revendication 14, **caractérisé en ce que** la plaque de contact (30) est montée de manière mobile sur la plaque de base (33), de façon à ce que celle-ci puisse être déplacée hors de l'alignement du fil de soudure (13).
